# EUROPÄISCHE PATENTSCHRIFT

(11) **EP 1 800 957 B1**
(45) Veröffentlichungstag und Bekanntmachung des Hinweises auf die Patenterteilung: **16.07.2008**
(21) Anmeldenummer: 05292768.8
(22) Anmeldetag: 21.12.2005
(51) Int. Cl.: B60R 16/02, H01R 35/02

(54) **Vorrichtung zur Signal- bzw. Stromübertragung zwischen Endstellen**
Device for signal and current transmission between terminals
Dispositif de transmission de signal ou de courant entre des terminaux

(43) Veröffentlichungstag der Anmeldung: 27.06.2007
(73) Patentinhaber: Nexans, 75008 Paris (FR)
(72) Erfinder: Steinert, Alexander, 92685 Floss (DE); Schröer, Frank, 92637 Weldon (DE)
(74) Vertreter: Döring, Roger

(56) Entgegenhaltungen:
- DE-A1- 19 511 693
- US-A- 5 752 843
- US-A- 5 800 190
- US-B1- 6 261 112

## Beschreibung

Die Erfindung bezieht sich auf eine Vorrichtung zur Signal- bzw. Stromübertragung zwischen relativ zueinander bewegbaren Endstellen, die einerseits an einem feststehenden Stator und andererseits an einem um eine mit dem Stator gemeinsame Achse drehbaren Rotor einer Kassette angebracht sind, bei welcher innerhalb der Kassette zwischen den Endstellen mindestens eine mit elektrischen Leitern ausgerüstete und in Windungen verlaufende, einen Wickelkörper bildende Flachband-Leitung angeordnet ist und bei welcher die Enden der Flachband-Leitung mit Kontaktteilen zum Anschließen weiterführender Leitungen verbunden sind.

Eine derartige Vorrichtung wird beispielsweise für die Übertragung eines Signals zum Auslösen des "Airbags" eines Prallschutzes für Kraftfahrzeuge benötigt. Sie ist zur Übertragung von elektrischen Signalen aber auch von elektrischem Strom im Lenkrad eines Kraftfahrzeugs untergebracht. Mit einer solchen Vorrichtung kann die Signal- und/oder Stromübertragung zwischen feststehenden und beweglichen Teilen des Kraftfahrzeugs ohne Schleifkontakte bzw. Schleifringe erfolgen. Statt der Worte "Flachband-Leitung" wird im folgenden die Abkürzung "FBL" verwendet.

Durch die EP 0 417 350 A1 ist eine Vorrichtungen zur kontaktlosen Stromübertragung zwischen zwei Endstellen mittels einer nach Art eines Federhauses zu einem Wickelkörper gewickelten FBL bekanntgeworden. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf.

Eine der Vorrichtung nach der EP 0 417 350 A1 entsprechende Vorrichtung geht aus der DE 195 11 693 A1, die die Merkmale des Oberbegriffs von Anspruch 1 zeigt, hervor. Diese Schrift betrifft einen Drehverbinder, der als Lenkstockschalter mit Wickelfeder bezeichnet ist. Die Wickelfeder stellt eine zylinderförmig aufgewickelte Verbindungsleitung dar. Der Stator dieses Drehverbinders wird vom Schaltergehäuse selbst gebildet, in welchem eine Deckelkammer gebildet ist. Als Deckel für die Deckelkammer dient eine den Rotor darstellende, offene Ringkammer, in welcher die Wickelfeder angeordnet ist.

Aus der DE 37 32 124 A1 geht eine Vorrichtung hervor, bei welcher der Wickelkörper aus einer FBL besteht, die als Bifilarspule gewickelt ist. Die Länge der in der Bifilarspule angeordneten FBL kann gegenüber einer Anordnung mit nach Art eines Federhauses gewickelter FBL verkürzt werden.

Aus der EP-0 735 631 B1 geht eine Vorrichtung zur Verbindung zweier relativ zueinander drehbarer Endstellen hervor, bei welcher der Wickelkörper in zwei Teilwicklungen mit gegenläufigem Wickelsinn und einer U-förmigen Umkehrstelle aufgeteilt ist, zwischen denen ein ringförmiger Führungskörper angeordnet ist. Der Führungskörper dient zur Führung und zur gegenseitigen Abstützung der Teilwicklungen.

Die Vorrichtung nach der EP 0 556 779 B1 hat ebenfalls eine aus einem Stator und einem Rotor bestehende Kassette. Sie hat keinen separaten Führungskörper für die Teilwicklungen. Diese werden bei dieser Vorrichtung von mehreren, insgesamt einen Wickelkörper bildenden FBL gebildet, von denen jede mit einer U-förmigen Umkehrstelle in der Kassette der Vorrichtung angeordnet ist. Die FBL sind elastisch ausgeführt und die Bereiche ihrer Umkehrstellen sind so stabil, daß die Windungen der FBL in Richtung Stator einerseits und Rotor andererseits gedrückt werden. Bei einer Drehung eines mit einer solchen Kassette ausgerüsteten Lenkrades eines Fahrzeugs bewegen sich alle Umkehrstellen in Umfangsrichtung der Kassette.

Der Erfindung liegt die Aufgabe zugrunde, die eingangs geschilderte Vorrichtung so zu gestalten, daß der fertiggestellte Wickelkörper vor seinem Einbau in eine Kassette während der Lagerung und insbesondere beim Transport gegen Beschädigungen geschützt ist.

Diese Aufgabe wird gemäß der Erfindung dadurch gelöst, daß zur Aufnahme des fertiggestellten Wickelkörpers zu dessen Schutz während eines Transports und/oder bei einer Lagerung eine denselben umgreifende, topfartige Abdeckung vorgesehen ist, die lösbar an einem im wesentlichen scheibenförmigen Träger angebracht ist.

Durch die am Träger angebrachte topfartige Abdeckung ist der von derselben aufgenommene Wickelkörper in seiner vorgefertigten Form am Träger gehalten und vor Beschädigungen geschützt. Die Abdeckung stellt außerdem sicher, daß die vorgefertigte Form des Wickelkörpers sowohl bei einer gegebenenfalls vorgenommenen Lagerung als auch beim Transport erhalten bleibt. Vor dem Einbau des Wickelkörpers in eine Kassette braucht nur die Abdeckung vom Träger entfernt zu werden, der vorteilhaft als Teil des Rotors der Kassette eingesetzt werden kann.

In bevorzugter Ausführungsform wird eine aus einem geräuschdämmenden Material bestehende Abdeckung verwendet. Sie kann dann in einer zusätzlichen Funktion beim Einbau des Wickelkörpers in eine aus Stator und Rotor bestehende Kassette in ihrer den Wickelkörper umgebenden Position verbleiben und als Element zur Geräuschdämmung mit in den Stator der Kassette eingesetzt werden. In der Endposition braucht dann nur die Verbindung zum Träger gelöst zu werden, der in der Kassette mit deren Rotor verbunden wird.

Ausführungsbeispiele des Erfindungsgegenstandes sind in den Zeichnungen dargestellt.

Es zeigen:
Fig. 1 und 2 Draufsichten auf eine offene Kassette für einen Airbag in zwei unterschiedlichen Ausführungen in schematischer Darstellung.
Fig. 3 einen Querschnitt einer Kassette nach Fig. 1.
Fig. 4 die Vorrichtung nach der Erfindung vor ihrem Zusammenbau, ebenfalls in schematischer Darstellung.
Fig. 5 die zusammengebaute Vorrichtung nach Fig. 3.
Fig. 6 einen Schnitt durch Fig. 5 längs der Linie VI- VI.
Fig. 7 einen Schnitt durch Fig. 6 längs der Linie VII- VII.

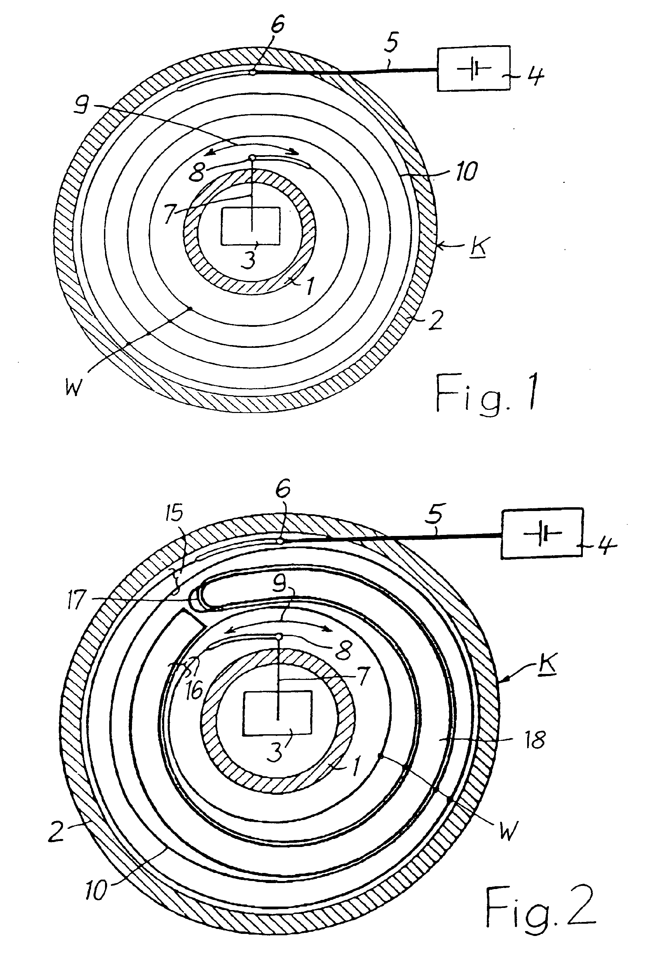

Die Fig. 1 bis 3 dienen nur zur allgemeinen Erläuterung des grundsätzlichen Aufbaus einer Kassette für den Airbag eines Fahrzeugs mit zwei unterschiedlichen Ausführungsformen eines aus einer FBL bestehenden Wickelkörpers. Der Wickelkörper kann aber, abweichend von der Darstellung in den Fig. 1 und 2, in allen erdenklichen Ausführungsformen aufgebaut sein, beispielsweise gemäß den eingangs erwähnten Schriften DE 37 32 124 A1 oder EP 0 556 779 B1.

In Fig. 1 sind schematisch zwei beispielsweise kreisförmig ausgebildete Wände 1 und 2 einer Kassette K dargestellt. Sie ist für den Einbau in die Lenksäule eines Kraftfahrzeugs bestimmt. Zur Stromversorgung einer Elektronik 3, durch deren Signal ein Airbag ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Zwischen den beiden Endstellen 6 und 8 ist eine FBL 10 mit mindestens zwei elektrischen Leitern angebracht. Die Leiter sind vorzugsweise als Flachleiter ausgebildet. Der Aufbau der FBL 10 und die Art ihres Anschlusses bzw. Abschlusses an den Endstellen 6 und 8 sind nicht genauer dargestellt. Sie sind prinzipiell in unterschiedlichen Varianten bekannt und hier nicht von Bedeutung.

Die FBL 10 kann gemäß Fig. 1 in der Kassette K zwischen den beiden Endstellen 6 und 8 in mehreren Windungen angeordnet sein, also nach Art eines Federhauses von Uhren. Die Drehbewegung der mit dem Lenkrad des Kraftfahrzeugs gekoppelten Endstelle 8 macht sich für eine einzelne Windung der FBL 10 nicht wesentlich bemerkbar. Es wird lediglich der Durchmesser des aus allen Windungen der FBL 10 bestehenden Wickelkörpers W verkleinert bzw. vergrößert.

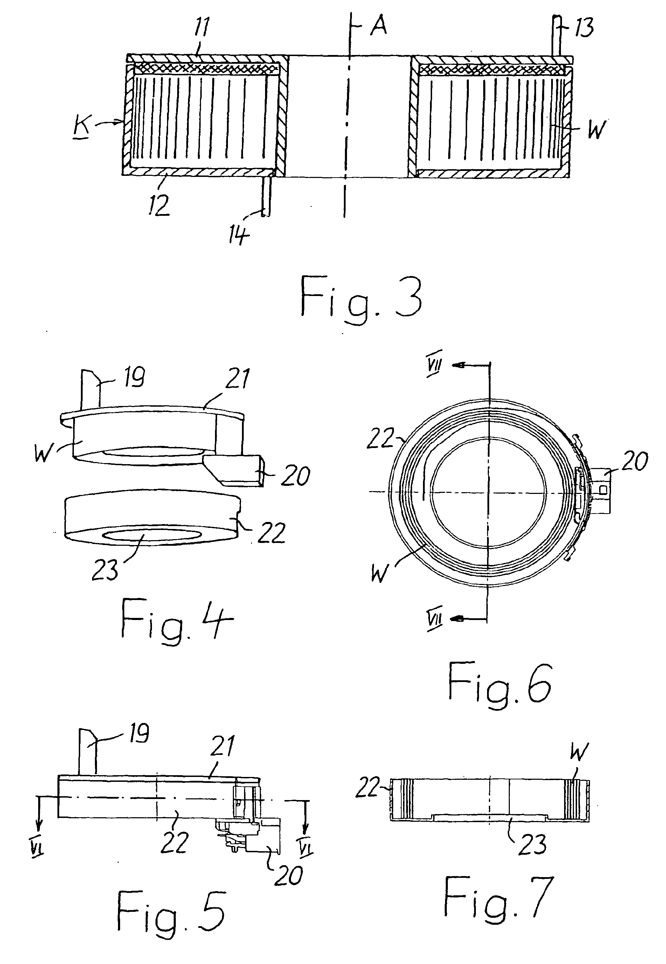

Die Kassette K besteht gemäß Fig. 3 aus einem Rotor 11 und einem Stator 12. Der Rotor 11 ist gegenüber dem Stator 12 um die Achse A der Kassette K drehbar. Der feststehende Stator 12 umschließt den Wickelkörper W, von dem in Fig. 3 einige Windungen schematisch eingezeichnet sind. An die FBL 10 sind über entsprechende Kontaktteile weiterführende, aus der Kassette K herausgeführte elektrische Leitungen 13 und 14 angeschlossen, beispielsweise die Leitungen 5 und 7 gemäß Fig. 1.

Bei der Ausführungsform der Kassette K nach Fig. 2 sind gleiche Teile wie in Fig. 1 mit gleichen Bezugszahlen versehen. Die zwischen den beiden Endstellen 6 und 8 angeordnete FBL 10 bildet hier einen Wickelkörper W, dessen Windungen in einen äußeren Wickelbereich 15 und einen inneren Wickelbereich 16 unterteilt sind. Die beiden Wickelbereiche 15 und 16 sind durch Klammern gekennzeichnet. Sie umfassen beispielsweise jeweils zwei bis drei Windungen. In den beiden Wickelbereichen 15 und 16 haben die Windungen der FBL 10 entgegengesetzte Wickelrichtungen. Die Wickelbereiche 15 und 16 sind durch eine etwa U-förmig ausgeführte Umkehrstelle 17 miteinander verbunden. Zwischen den beiden Wickelbereichen 15 und 16 ist ein einteiliger, ringförmig ausgeführter Führungskörper 18 angebracht, der die Umkehrstelle 17 umfaßt.

Der Wickelkörper W ist in allen Ausführungsformen der Vorrichtung an den Enden der FBL 10 mit Kontaktteilen 19 und 20 ausgerüstet, die in den Fig. 4 und 5 schematisch angedeutet sind. Sie sind beispielsweise mit Kontaktstiften versehen, die mit den Leitern der FBL 10 elektrisch leitend verbunden sind. In die Kontaktteile 19 und 20 können Gegenkontakte eingesteckt werden, die an den weiterführenden Leitungen 5 und 7 bzw. 13 und 14 angebracht sind. Das Kontaktteil 19 ist an einem im wesentlichen scheibenförmigen Träger 21 befestigt, der Teil des Rotors 11 einer Kassette K ist, während das für den Stator 12 der Kassette K bestimmte Kontaktteil 20 separat gehalten ist.

Der Träger 21 ist in bevorzugter Ausführungsform als Ringscheibe ausgeführt. Er besteht mit Vorzug aus einem formstabilen Kunststoff, wie beispielsweise Polyoxymethylen (POM) oder Polybutyltherephthalat (PBT). Der Wickelkörper W liegt in seiner hier maßgeblichen Endposition am Träger 21 an. Er wird in dieser Endposition gemäß Fig. 5 durch eine topfartige Abdeckung 22 gehalten, die lösbar mit dem Träger 21 verbunden ist. Diese Endposition geht schematisch aus Fig. 7 hervor. Die Abdeckung 22 hat in praktischer Ausführung in ihrem Boden ein zentrales Loch 23, durch welches in Montageposition beispielsweise Teile eines Lenkrades hindurchragen.

Die Vorrichtung nach Fig. 5 wird beispielsweise wie folgt fertiggestellt:

Aus einer FBL 10 wird ein Wickelkörper W geformt, wie er beispielsweise aus Fig. 1 hervorgeht. An den Enden der FBL 10 werden dabei die Kontaktteile 19 und 20 angebracht. Das Kontaktteil 19 wird dann an bzw. in dem Träger 21 befestigt und der Wickelkörper W wird, den Ansatz 22 umgreifend, an denselben angelegt. Dabei nimmt das Kontaktteil 20 die aus Fig. 4 ersichtliche Position ein. Anschließend wird die Abdeckung 22 über den Wickelkörper W geschoben und lösbar am Träger 21 angebracht, beispielsweise mittels Klammern. Sie kann an ihrer äußeren Umfangsfläche eine Vertiefung haben, in welche das Kontaktteil 20 eingreift. Die Abdeckung 22 nimmt den Wickelkörper W vollständig auf und hält auch das Kontaktteil 20 in Position. Der Wickelkörper W ist dadurch vor Beschädigungen geschützt und in seiner vorgegebenen Form stabilisiert. Die ganze Vorrichtung kann dann gelagert oder zur Weiterverarbeitung, beispielsweise bei einem Kunden, zu einem entsprechenden Montageort transportiert werden.

Zum Einbau in eine Kassette K muß die Abdeckung 22 vom Träger 21 gelöst werden, der selbst als Teil des Rotors 11 der Kassette K dient. Die Abdeckung 22 kann vollständig von der Vorrichtung entfernt und vernichtet werden. Sie besteht dann mit Vorteil aus einem Kunststoff, der durch Aufarbeitung aus Abfällen gewonnen wurde.

In bevorzugter Ausführungsform besteht die Abdeckung 22 aus einem geräuschdämmenden Material, wie beispielsweise geschäumtem Polyurethan oder einem Faservlies. Sie wird dann mit Vorteil gemeinsam mit dem Wickelkörper W in eine Kassette K eingebaut und beispielsweise durch Kleben fest mit deren Stator 12 verbunden. Die Abdeckung 22 ist danach eine geräuschdämmende Auskleidung des Stators 12, die an dessen inneren Wandungen anliegt.

## Patentansprüche

1. Vorrichtung zur Signal- bzw. Stromübertragung zwischen relativ zueinander beweglichen Endstellen, die einerseits an einem feststehenden Stator und andererseits an einem um eine mit dem Stator gemeinsame Achse drehbaren Rotor einer Kassette angebracht sind, bei welcher innerhalb der Kassette zwischen den Endstellen mindestens eine mit elektrischen Leitern ausgerüstete und in Windungen verlaufende, einen Wickelkörper bildende Flachband-Leitung angeordnet ist und bei welcher die Enden der Flachband-Leitung mit Kontaktteilen zum Anschließen weiterführender Leitungen verbunden sind, **dadurch gekennzeichnet, daß** zur Aufnahme des fertiggestellten Wickelkörpers (W) zu dessen Schutz während eines Transports und/oder bei einer Lagerung eine denselben umgreifende, topfartige Abdeckung (22) vorgesehen ist, die lösbar an einem im wesentlichen scheibenförmigen Träger (21) angebracht ist.

2. Vorrichtung nach Anspruch 1, **dadurch gekennzeichnet, daß** die Abdeckung (22) aus einem geräuschdämmenden Material besteht.

## Claims

1. Apparatus for signal and/or current transmission between end points which can move relative to one another and are fitted on the one hand to a stationary stator and on the other hand to a rotor, which can rotate about the same axis as the stator, of a cassette, in which apparatus at least one ribbon line, which is equipped with electrical conductors, runs in turns and forms a winding former, is arranged within the cassette between the end points, and in which the ends of the ribbon line are connected to contact parts for connection of lines which continue further, **characterized in that** a pot-like cover (22) is provided in order to hold the completed winding former (W) for its protection during transport and/or storage, which cover (22) surrounds the winding former (W) and is detachably fitted to a mount (21) which is essentially in the form of a disc.

2. Apparatus according to Claim 1, **characterized in that** the cover (22) is composed of a silencing material.

## Revendications

1. Dispositif pour la transmission de signal ou de courant entre des stations terminales pouvant être déplacées les unes par rapport aux autres, lesquelles sont montées d'un côté sur un stator fixe et de l'autre côté sur un rotor d'une cassette pouvant tourner autour d'un axe commun avec le stator, avec lequel au moins une ligne à ruban équipée de conducteurs électriques et s'étendant en des enroulements en formant une bobine est disposée à l'intérieur de la cassette entre les stations terminales et avec lequel les extrémités de la ligne à ruban sont reliées avec des éléments de contact pour le raccordement de lignes de continuité, **caractérisé en ce qu'**un capot (22) de type pot est prévu pour recevoir la bobine (W) terminée et entourant celle-ci en vue de sa protection pendant un transport et/ou lors d'un entreposage, lequel est monté de manière amovible sur un support (21) essentiellement en forme de disque.

2. Dispositif selon la revendication 1, **caractérisé en ce que** le capot (22) se compose d'un matériau insonorisant.
